Europäisches Patentamt

European Patent Office

Office européen des brevets

(11) Veröffentlichungsnummer: **0 260 425**
**A1**

# (12) EUROPÄISCHE PATENTANMELDUNG

(21) Anmeldenummer: 87111308.0

(22) Anmeldetag: 05.08.87

(51) Int. Cl.4: **H02G 3/06** , H02B 1/20

(30) Priorität: 20.08.86 DE 3628268

(43) Veröffentlichungstag der Anmeldung:
23.03.88 Patentblatt 88/12

(84) Benannte Vertragsstaaten:
DE FR GB IT

(71) Anmelder: **Hewlett-Packard GmbH**
**Herrenberger Strasse 130 Postfach 14 30**
**D-7030 Böblingen(DE)**

(72) Erfinder: **Kärcher, Michael**
**Winterlinger Weg 13**
**D-7000 Stuttgart 80(DE)**

(54) **Zugentlastungsvorrichtung.**

(57) Eine Zugentlastungsvorrichtung für Elektrokabel
weist eine gemeinsame Grundplatte auf sowie
wenigstens drei zylinderförmige Zapfen. Zwischen
diese Zapfen kann das Kabel eingelegt werden und
wird durch Reibungskräfte gehalten. Bei einer derartigen Zugentlastungsvorrichtung wird das Einlegen
und Auswechseln der Kabel wesentlich erleichtert
und kann insbesondere ohne zusätzliches Werkzeug
vorgenommen werden.

FIG.1

EP 0 260 425 A1

# ZUGENTLASTUNGSVORRICHTUNG

Die Erfindung betrifft eine Zugentlastungsvorrichtung für Elektrokabel, insbesondere Computer- oder Netzkabel.

Eine Zugentlastungsvorrichtung hat die Aufgabe, ein von einem elektrischen Gerät nach aussen führendes Kabel so mit dem Gerätegehäuse oder dem Gerätechassis zu verbinden oder es so an diesen zu fixieren, daß bei der Ausübung von Zugkräften auf das Kabel die Kräfte nur auf das Gerätegehäuse oder das Gerätechassis, nicht jedoch auf die Schaltungsplatinen oder auf elektrische Bauteile im Inneren des Gerätes, mit denen das Netzkabel verbunden ist, übertragen werden. Die Zugentlastungsvorrichtung stellt damit sicher, daß an dem Kabel angreifende Zugkräfte allenfalls zu einer Verschiebung des gesamten Gerätes führen, nicht jedoch zu einer internen Beschädigung.

Eine bekannte Zugentlastungsvorrichtung verwendet ein Klemmstück. Das zu befestigende Kabel wird auf den Gehäuseboden aufgelegt, anschließend das Klemmstück darübergelegt und mit dem Gehäuseboden verschraubt. Das eingeklemmte Kabel kann nun nicht mehr mechanisch herausgezogen werden. Natürlich ist auch eine Befestigung an einer Gehäusewand oder an einem Gehäusedeckel möglich. Die Verschraubung besteht üblicherweise aus an den Gehäuseboden angeformten Schraubbolzen, die durch entsprechende Bohrungen des Klemmstücks hindurchgeführt und mit Muttern gesichert werden.

Eine andere Lösung besteht aus einer flexiblen und einseitig offenen Schlaufe, in die das Kabel eingelegt wird. Die Schlaufe wird anschließend an ihren freien Enden mit einem Gehäuseteil verschraubt, wobei das Kabel eingepresst wird. Eine derartige Zugentlastung eignet sich allerdings nur für Kabel von kleinem bis mittlerem Durchmesser und ist auch nur zur Aufnahme begrenzter Zugkräfte geeignet.

Allen diesen Zugentlastungen ist gemeinsam, daß die Verbindung nur umständlich und mittels Werkzeugen - meist Schraubendreher oder Schraubenschlüssel - gelöst werden kann. Insbesondere im Computerbereich besteht jedoch häufig die Notwendigkeit, Zugentlastungsvorrichtungen rasch zu lösen, andere Kabel einzulegen und die Zugentlastungvorrichtung mit dem neuen Kabel wieder in Funktion zu setzen. Dies ist beispielsweise der Fall, wenn Interfacekabel ausgetauscht werden sollen oder wenn einzelne, in einem Ständer oder einem Wagen montierte Komponenten eines Computersystems ausgetauscht werden sollen.

Der vorliegenden Erfindung liegt die Aufgabe zugrunde, eine Zugentlastungsvorrichtung der eingangs genannten Art so auszubilden, daß das/die Kabel rasch, insbesondere mit wenigen Handgriffen und ohne Zuhilfenahme von Werkzeug eingelegt, gelöst und ausgetauscht werden kann/können. Diese Aufgabe wird dadurch gelöst, daß auf einer gemeinsamen Grundplatte wenigstens drei vorzugweise zylinderförmige Zapfen angeordnet sind, deren Längs-achse lotrecht zur Ebene der Grundplatte verläuft und deren Abstände wenigstens dem Durchmesser der aufzunehmenden Kabel entsprechen. Diese Grundplatte wird - beispielsweise durch Verschraubung oder mittels Schnappverbindungen - mit einem Gehäuseteil verbunden. Das zu befestigende Kabel wird alternierend zwischen die Zapfen eingelegt, das heißt mit jeweils wechselnder Umwindungsrichtung. Hierbei findet das Kabel aufgrund der auftretenden Reibungskräfte ausreichenden Halt, da Selbsthemmung eintritt. Werden die Abstände der Zapfen entsprechend gewählt (z.B. nur geringfügig größer als der Durchmesser der aufzunehmenden Kabel), so können auch sehr große Zugkräfte aufgenommen werden.

Die erfindungsgemäße Zugentlastungsvorrichtung ermöglicht es, Kabel sehr einfach einzulegen oder auszuwechseln, da diese Kabel lediglich zwischen den Zapfen herausgenommen werden müssen, wonach ein neues Kabel eingelegt werden kann. Hierzu sind nur wenige Handgriffe und insbesondere kein Werkzeug erforderlich. Dabei weist die erfindungsgemäße Zugentlastungsvorrichtung hinsichtlich der Aufnahmefähigkeit für Zugkräfte ebensogute bzw. bessere Eigenschaften auf wie die bekannten Zugentlastungsvorrichtungen.

Zugentlastungsvorrichtungen gemäß der Erfindung können besonders vorteilhaft in Systemen eingesetzt werden, welche ein häufiges Auswechseln oder Ergänzen von Kabeln erfordern. Dies können z.B. Computer mit einer Vielzahl von Interfacekarten sein, wobei die an die Interfacekarten angeschlossenen Kabel jeweils zugentlastet werden müssen. Beim Hinzufügen oder Austauschen von Karten können die nach aussen führenden Leitungen rasch befestigt oder gelöst werden.

Ein anderes Einsatzgebiet der Zugentlastungsvorrichtung sind Computergestelle oder Computerwagen, in welche eine Vielzahl von Systembausteinen eingehängt oder sonstwie befestigt werden können. Auch diese Bausteine weisen in der Regel eine Vielzahl von Datenkabeln, aber auch Netzkabel auf, die rasch befestigt, gelöst und ausgetauscht werden müssen. Durch die leichte Handhabbarkeit der erfindungsgemäßen Zugentlastungsvorrichtung erhöht sich auch der Gebrauchswert solcher Anlagen.

Vorteilhaft ist es, wenn die Höhe der Zapfen einem Mehrfachen des Durchmessers der aufzunehmenden Kabel entspricht. Dann können zwischen die Zapfen mehrere Kabel - unter Umständen auch mit unterschiedlicher Umwindungsrichtung - eingelegt werden, was insbesondere bei Anlagen, bei denen eine Vielzahl von Kabeln abgespannt werden müssen, von Vorteil ist.

Gemäß einer weiteren vorteilhaften Ausführungsform der Erfindung sind die Zapfen in wenigstens drei Reihen, die lotrecht zur Durchführungsrichtung der Kabel verlaufen, angeordnet. Hierbei können mehrere Kabel parallel in die Zugentlastungsvorrichtung eingelegt werden. Besitzen die Zapfen ausserdem entsprechende Höhe, so kann die Zahl der von der Zugentlastungsvorrichtung aufnehmbaren Kabel nochmals erhöht werden.

Bei Anordnung der Zapfen in Reihen ist das besonders günstig, wenn die mittlere(n) Zapfenreihe(n) gegenüber den äusseren Zapfenreihen versetzt ist/sind. Beim Einlegen der Kabel ergeben sich hierbei größere Umschlingungswinkel, was zu einer erhöhten Haftreibung führt; hierdurch können auch sehr hohe Zugkräfte aufgenommen werden. Vorteilhaft ist es überdies, wenn die mittlere(n) Zapfenreihe(n) gegenüber den äusseren Zapfenreihen asymmetrisch versetzt ist/sind. Hierdurch ist es möglich, Kabel mit verschiedenem Durchmesser zuverlässig zu fixieren, wobei die Kabel mit kleinerem Durchmesser durch die entstehenden kleineren Zwischenräume und die Kabel mit grösserem Durchmesser durch die entstehenden grösseren Zwischenräume geführt werden.

Eine weitere Erhöhung der Zugbelastbarkeit ergibt sich, wenn einzelne Zapfen mit dem Kabel mehrfach umschlungen werden.

In bevorzugter Weiterbildung der Erfindung bestehen die Grundplatte und die Zapfen aus Kunststoffmaterial, vorzugsweise zähelastischem Kunststoffmaterial. Die Zugentlastungsvorrichtung lässt sich hierdurch sehr einfach und preisgünstig fertigen und weist eine gewissen Elastizität auf, was das Einlegen der Kabel - durch Auseinanderpressen der Zapfen - erleichtert. Ausserdem hat der Kunststoff einen relativ hohen Haftreibungskoeffizienten. Eine einfache Herstellungsmöglichkeit und zugleich Materialersparnis werden gewährleistet, wenn die Zapfen hierbei als Hohlkörper ausgebildet sind.

Wird die Zugentlastungsvorrichtung aus Kunststoff hergestellt, so ist in vorteilhafter Weiterbildung der Erfindung vorgesehen, daß die Grundplatte seitlich vorspringende Einhakwinkel und/oder Rast

nasen aufweist. Hierdurch kann auch die Grundplatte selbst ohne Werkzeug an einem Gehäuseteil befestigt werden, indem die Einhakwinkel in entsprechende Durchbrechungen des Gehäuses eingehängt und die Rastnasen in andere Öffnungen desselben eingeschnappt werden.

Eine weitere zweckmässige Fortbildung der Erfindung sieht vor, daß wenigstens einer der Zapfen an seinem oberen Ende eine Arretiervorrichtung, vorzugsweise eine Rastnase, zur Anbringung eines Deckelteils aufweist. Ein derartiges Deckelteil verhindert, daß die Kabel nach oben zwischen den Zapfen austreten; falls Grundplatte und Zapfen aus verhältnismässig weichem Kunststoffmaterial gefertigt sind, gibt es diesen überdies zusätzlichen Halt und die notwendige Stabilität.

Weitere Merkmale und Vorteile ergeben sich aus der nachfolgenden Beschreibung zur Zeichnung, in der eine bevorzugte Ausführungsform der Erfindung dargestellt ist. Es zeigen:

Fig. 1 eine perspektivische Ansicht einer Zugentlastungsvorrichtung gemäß der Erfindung,

Fig. 2 die Draufsicht auf das Teil der Fig. 1, und

Fig. 3 die Ansicht dieses Teils in Richtung des Pfeils III der Fig. 2.

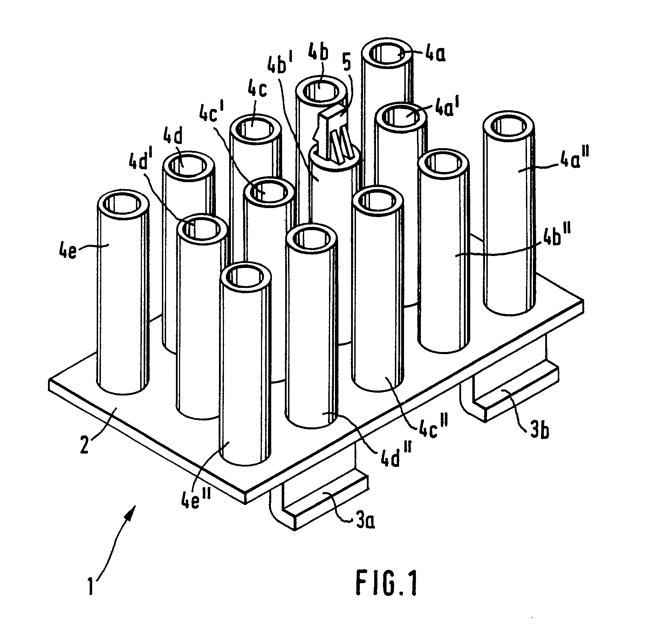

In Fig. 1 ist eine Zugentlastungsvorrichtung als Ganzes mit 1 bezeichnet. Diese Zugentlastungsvorrichtung ist aus zähelastischem Kunststoffmaterial gefertigt und weist eine Grundplatte 2 auf. An dieser Grundplatte sind Einhakwinkel 3a und 3b angeformt, mit denen die Grundplatte in entsprechende Durchbrechungen eines Gehäuseteils eingehängt werden kann. Auf der gegenüberliegenden Seite befinden sich Rastnasen, die in der Darstellung gemäß Fig. 1 nicht erkennbar sind, aber in den folgenden Darstellungen erläutert werden. Diese Rastnasen dienen zum Einschnappen in weitere Durchbrechungen des Gehäuseteils.

Auf die Grundplatte 2 aufgesetzt und an diese angeformt sind eine Vielzahl von hohlzylinderförmigen Zapfen, die in drei Reihen angeordnet und mit 4a bis 4e (erste Reihe), 4a' bis 4d' (zweite Reihe) und mit 4a'' bis 4e'' (dritte Reihe) bezeichnet sind. Die Zapfen besitzen eine Höhe, die einem Mehrfachen des Durchmessers der aufzunehmenden Kabel entsprechen. Dadurch können über die Höhe dieser Zapfen mehrere Kabel in die Zugentlastungsvorrichtung eingelegt werden. Die Durchführung der Kabel wird anhand der folgenden Figuren beschrieben werden.

Der Zapfen 4b' ist an seinem oberen Ende mit einer Rastnase 5 versehen. Diese Rastnase wird in die Öffnung eines nicht dargestellten Deckelteils eingeschnappt, welches verhindert, daß die Kabel - beispielsweise bei Ausübung von Druck - nach oben aus der Zugentlastungsvorrichtung geschoben werden. Das Deckelteil besitzt auf seiner den Zapfen zugewandten Seite überdies Vertiefungen, in die diese Zapfen eingreifen. Hierdurch gibt das Deckelteil der eigentlichen Zugentlastungsvorrichtung zusätzliche Stabilität.

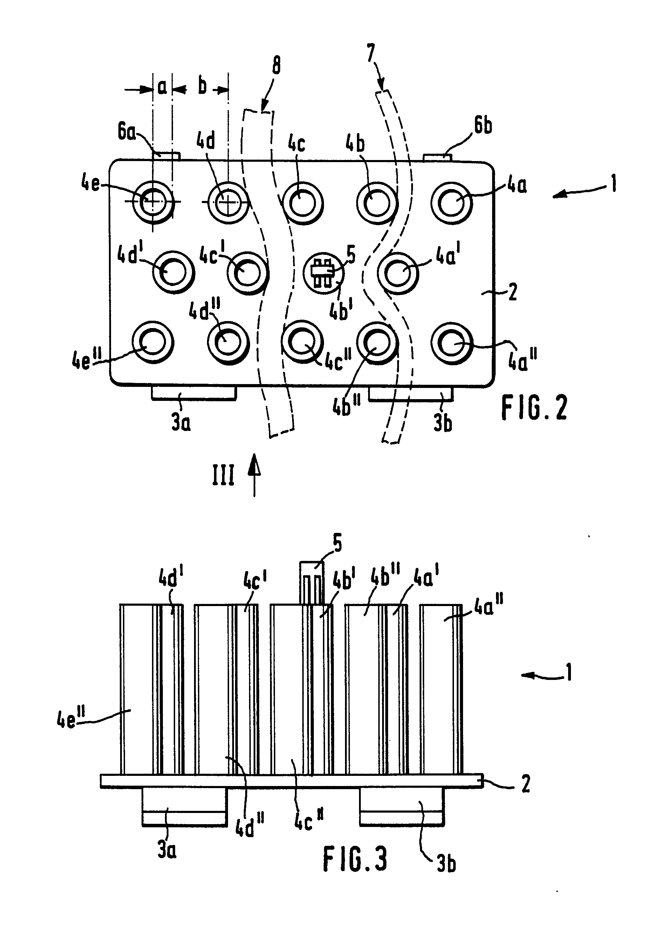

Fig. 2 zeigt die Draufsicht auf die Zugentlastungsvorrichtung. Außer den Einhakwinkeln 3a und 3b sind hier auch die Rastnasen 6a und 6b zu erkennen. Außerdem zeigt diese Figur, daß die mittlere Zapfenreihe (Zapfen 4a' bis 4d') gegenüber den äusseren Zapfenreihen versetzt ist. Die Versetzung ist asymmetrisch gewählt, wie daraus erkennbar ist, daß das Maß a kleiner als das Maß b ist. Hierdurch können Kabel verschiedenen Durchmessers eingelegt und gleich sicher gehalten werden. Dünne Kabel können in der Art des gestrichelt angedeuteten Kabels 7 eingelegt werden, während Kabel grösseren Durchmessers in die grösseren Zwischenräume und mit anders orientiertem Umschlingungswinkel eingelegt werden, wie das gestrichelte Beispiel des Kabels 8 zeigt. Außerdem ist es natürlich möglich, die Kabel auch anders in die Zugentlastungsvorrichtung einzulegen oder einzelne Zapfen ein-oder mehrfach vollständig zu umschlingen.

Wie aus den Figuren 1 und 2 ersichtlich ist, können mehrere Kabel parallel durch die Zugentlastungsvorrichtung durchgeführt werden (senkrecht zur Ausichtung der Zapfenreihen); ebenso ist es aufgrund der Höhe der Zapfen aber auch möglich, mehrere Kabel übereinander zu legen.

Die Fig. 3 zeigt eine Ansicht der Zugentlastungsvorrichtung in Richtung des Pfeils III der Fig. 2. Auch aus dieser Figur ist nochmals deutlich zu erkennen, daß die mittlere Zapfenreihe (Zapfen 4a' bis 4d') gegenüber den äusseren Zapfenreihen asymmetrisch versetzt ist.

**Ansprüche**

1. Zugentlastungsvorrichtung für Elektrokabel, insbesondere Computer-oder Netzkabel, dadurch gekennzeichnet, daß auf einer gemeinsamen Grundplatte (2) wenigstens drei vorzugsweise zylinderförmige Zapfen (4a-4e,4a'-4d',4a"-4e") angeordnet sind, deren Längsachse lotrecht zur Ebene der Grundplatte (2) verläuft und deren Abstände wenigstens dem Durchmesser der aufzunehmenden Kabel (7,8) entsprechen.

2. Zugentlastungsvorrichtung nach Anspruch 1, dadurch gekennzeichnet, daß die Höhe der Zapfen (4a-4e,4a'-4d',4a"-4e") einem Mehrfachen des Durchmessers der aufzunehmenden Kabel (7,8) entspricht.

3. Zugentlastungsvorrichtung nach Anspruch 1 oder 2, dadurch gekennzeichnet, daß die Zapfen (4a-4e,4a'-4d',4a"-4e") in wenigstens drei Reihen (4a-4e; 4a'-4d'; 4a"-4e"), die lotrecht zur Durchführungsrichtung der Kabel (7,8) verlaufen, angeordnet sind.

4. Zugentlastungsvorrichtung nach Anspruch 3, dadurch gekennzeichnet, daß die mittlere(n) Zapfenreihe(n) (4a'-4d') gegenüber den äußeren Zapfenreihen (4a-4e; 4a"-4e") versetzt ist/sind.

5. Zugentlastungsvorrichtung nach Anspruch 4, dadurch gekennzeichnet, daß die mittlere(n) Zapfenreihe(n) (4a'-4d') gegenüber den äußeren Zapfenreihen (4a-4e; 4a"-4e") asymmetrisch versetzt ist/sind.

6. Zugentlastungsvorrichtung nach wenigstens einem der vorhergehenden Ansprüche, dadurch gekennzeichnet, daß die Grundplatte (2) und die Zapfen (4a-4e,4a'-4d',4a"-4e") aus vorzugsweise zähelastischem Kunststoffmaterial bestehen.

7. Zugentlastungsvorrichtung nach Anspruch 6, dadurch gekennzeichnet, daß die Zapfen (4a-4e,4a'-4d',4a"-4e") als Hohlkörper ausgebildet sind.

8. Zugentlastungsvorrichtung nach Anspruch 6 oder 7, dadurch gekennzeichnet, daß die Grundplatte (2) seitlich vorspringende Einhakwinkel (3a,3b) und/oder Rastnasen (6a,6b) aufweist.

9. Zugentlastungsvorrichtung nach wenigstens einem der vorhergehenden Ansprüche, dadurch gekennzeichnet, daß wenigstens einer der Zapfen (4a-4e,4a'-4d',4a"-4e") an seinem oberen Ende eine Arretiervorrichtung, vorzugsweise eine Rastnase (5), zur Anbringung eines Dekkelteils aufweist.

FIG.1

FIG.2

FIG.3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | FR-A-2 541 521 (KONTAKTA) <br> * Seite 7, Zeilen 1-12,19-29; Figur 1 * | 1 | H 02 G 3/06 <br> H 02 B 1/20 |
| Y | | 2-5,9 | |
| Y | FR-A-2 259 512 (TELEMECANIQUE) <br> * Seite 6, Ansprüche 1-4; Figur 2 * | 2,9 | |
| A | | 6-8 | |
| Y | AT-B- 187 961 (SIEMENS) <br> * Ansprüche 1,4; Figur 4 * | 3-5 | |
| P,X | CH-A- 660 097 (REICHLE) <br> * Ansprüche 1,9; Figur 1 * | 1,6 | |

RECHERCHIERTE SACHGEBIETE (Int. Cl.4)

H 01 R 13/00
H 02 G 3/00
H 02 B 1/00

Der vorliegende Recherchenbericht wurde für alle Patentansprüche erstellt

| Recherchenort | Abschlußdatum der Recherche | Prüfer |
|---|---|---|
| DEN HAAG | 08-12-1987 | DIOU J.M. |